(19) Europäisches Patentamt
European Patent Office
Office européen des brevets

(11) **EP 4 632 675 A1**

(12) **EUROPEAN PATENT APPLICATION**
published in accordance with Art. 153(4) EPC

(43) Date of publication:
**15.10.2025 Bulletin 2025/42**

(21) Application number: **23899687.0**

(22) Date of filing: **08.11.2023**

(51) International Patent Classification (IPC):
*G06T 7/13* (2017.01)

(52) Cooperative Patent Classification (CPC):
**G06T 1/00; G06T 7/11; G06T 7/13; G06T 7/136; G06T 7/143**

(86) International application number:
**PCT/CN2023/130435**

(87) International publication number:
**WO 2024/120107 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 CN 202211585584**

(71) Applicant: **Nio Smart Technology Co., Ltd.**
**Shanghai 201800 (CN)**

(72) Inventor: **LIAO, Shengyang**
**Shanghai 201804 (CN)**

(74) Representative: **Vossius & Partner**
**Patentanwälte Rechtsanwälte mbB**
**Siebertstrasse 3**
**81675 München (DE)**

(54) **METHOD FOR ACQUIRING FOREGROUND CONTOUR OF TEXT, METHOD FOR ACQUIRING WATERMARK IMAGE, SYSTEM, APPARATUS AND MEDIUM**

(57) A method and a system for acquiring a foreground contour of a text are provided. An original text image to be processed is converted into a grayscale image, histogram statistics and edge extraction are separately performed on the grayscale image to obtain a binary image and an edge gradient result of the grayscale image, the binary image and an edge gradient are fused to obtain a foreground contour map, and the watermark image is acquired based on the foreground contour map. Performing image segmentation based on a statistical histogram to obtain the binary image enables a more accurate segmentation result; performing edge extraction on the grayscale image enables the edge gradient result to more accurately reflect a contour of an edge; a foreground contour map obtained based on the fusion of the edge gradient result and the binary image allows for extracting a text contour more accurately.

```
                                                    ┌─ S101
┌─────────────────────────────────────────────────────┐
│ Convert an original text image to be processed into a grayscale image │
└─────────────────────────────────────────────────────┘
                                                    ┌─ S102
┌─────────────────────────────────────────────────────┐
│ Perform histogram statistics on the grayscale image, and perform binary │
│ segmentation on the grayscale image based on a histogram statistics result to │
│ obtain a binary image of the grayscale image │
└─────────────────────────────────────────────────────┘
                                                    ┌─ S103
┌─────────────────────────────────────────────────────┐
│ Perform edge extraction on the grayscale image to acquire an edge gradient result │
│ of the grayscale image │
└─────────────────────────────────────────────────────┘
                                                    ┌─ S104
┌─────────────────────────────────────────────────────┐
│ Obtain a foreground contour map of the text image by fusing the edge │
│ gradient result with the binary image │
└─────────────────────────────────────────────────────┘
```

FIG. 1

EP 4 632 675 A1

**Description**

**CROSS-REFERENCE TO RELATED APPLICATION**

This application claims priority of the Chinese patent application 202211585584.4 filed December 9, 2022 and entitled "Method and system for acquiring foreground contour, watermark image of text, device and medium", the entire content of which is incorporated herein by reference.

**TECHNICAL FIELD**

The present invention relates to the technical field of data processing, and particularly provides a method and a system for acquiring a foreground contour, a watermark image of a text, a device and a medium.

**BACKGROUND**

Currently, existing commercially available mobile phones lack a method for extracting a foreground contour of a handwritten text and a method for generating a watermark image.
Accordingly, a new solution for extracting the foreground contour of the handwritten text and acquiring the watermark image is needed in the art to solve the above problems.

**SUMMARY**

In order to overcome the above defects, the present invention is proposed to solve or at least partially solve the problem of how to acquire, based on a text image, a foreground contour of the text image and a watermark image.
In a first aspect, the present invention provides a method for acquiring a foreground contour of a text, including:

converting an original text image to be processed into a grayscale image;

performing histogram statistics on the grayscale image, and performing binary segmentation on the grayscale image based on a histogram statistics result to obtain a binary image of the grayscale image;

performing edge extraction on the grayscale image to acquire an edge gradient result of the grayscale image; and

obtaining a foreground contour map of the text image based on the edge gradient result and the binary image.

In a technical solution of the above method for acquiring a foreground contour of a text, the step of "performing histogram statistics on the grayscale image, and performing binary segmentation on the grayscale image based on a histogram statistics result to obtain a binary image of the grayscale image" includes:

performing filtering preprocessing on the grayscale image to acquire a preprocessing result image;

performing histogram statistics on the preprocessing result image to obtain a histogram of the preprocessing result image, where a number of the respective grayscale values in the preprocessing result image is counted in the histogram;

acquiring an image segmentation threshold based on peak values of the histogram; and

performing image segmentation on the grayscale image based on the image segmentation threshold to obtain the binary image.

In a technical solution of the above method for acquiring a foreground contour of a text, the peak values include a maximum peak value and a secondary peak value, and the step of "acquiring an image segmentation threshold based on peak values of the histogram" includes:

acquiring the maximum peak value of the histogram and a grayscale value corresponding to the maximum peak value;

acquiring the secondary peak value of the histogram and a grayscale value corresponding to the secondary peak value based on the maximum peak value; and

acquiring the image segmentation threshold based on the maximum peak value, the secondary peak value, and the respective corresponding grayscale values.

In a technical solution of the above method for acquiring a foreground contour of a text, the step of "acquiring the image segmentation threshold based on the maximum peak value, the secondary peak value, and the respective corresponding grayscale values" includes:

determining whether a difference between the grayscale value corresponding to the maximum peak value and the grayscale value corresponding to the secondary peak value is greater than a preset grayscale threshold;
if yes, acquiring the image segmentation threshold based on a median of the maximum peak value and the secondary peak value; and
if not, acquiring the image segmentation threshold based on the following formula:

$$Thre = H_{max} - bias$$

where *Thre* is the image segmentation threshold, $H_{max}$ is the maximum peak value, and *bias* is a preset bias value.

In a technical solution of the above method for acquiring a foreground contour of a text, the step of "acquiring the secondary peak value of the histogram and a grayscale value corresponding to the secondary peak value based on the maximum peak value" includes acquiring the secondary peak value based on the following formula:

$$H_{max2} = max\left[(x - H_{max})^2 * I_{hist}(x)\right]$$

where $H_{max2}$ is the secondary peak value, x is the grayscale value of the histogram that has the range of [0, 255], $H_{max}$ is the maximum peak value, and $I_{hist}(x)$ is the number of the respective grayscale values.
In a technical solution of the above method for acquiring a foreground contour of a text, the step of "performing filtering preprocessing on the grayscale image to acquire a preprocessing result image" includes:
performing filtering preprocessing on the grayscale image by means of Gaussian filtering or median filtering to acquire the preprocessing result image.
In a technical solution of the above method for acquiring a foreground contour of a text, the step of "performing edge extraction on the grayscale image to acquire an edge gradient result of the grayscale image" includes:

performing edge extraction on the grayscale image in horizontal and vertical directions using a Schaar operator, respectively; and
weighting the extracted edges in the horizontal direction and the vertical direction to obtain an edge gradient result.

In a technical solution of the above method for acquiring a foreground contour of a text, obtaining a foreground contour map of the text image based on the edge gradient result and the binary image includes:

comparing, for each pixel, the edge gradient result with a brightness value of the pixel in the binary image; and
using a brightness value of a pixel with a high brightness value as a brightness value of a corresponding pixel in the foreground contour map, to acquire the foreground contour map of the text image.

In a second aspect, the present invention provides a method for acquiring a watermark image of a text, including:

acquiring a foreground contour map of the text, where the foreground contour map is acquired based on the method for acquiring a foreground contour of a text in any one of the technical solutions of the above method for acquiring a foreground contour of a text; and

setting the transparency of pixels without contours in the foreground contour map of the text to transparent, to acquire the watermark image of the text.

In a third aspect, provided is a system for acquiring a foreground contour of a text, including:

a grayscale image conversion module, configured to convert an original text image to be processed into a grayscale image;

a binary image acquiring module, configured to perform histogram statistics on the grayscale image, and perform binary segmentation on the grayscale image based on a histogram statistics result to obtain a binary image of the grayscale image;

an edge gradient result acquiring module, configured to perform edge extraction on the grayscale image to acquire an edge gradient result of the grayscale image; and

a foreground contour map acquiring module, configured to obtain a foreground contour map of the text image based on the edge gradient result and the binary image.

In a fourth aspect, provided is a system for acquiring a watermark image of a text, including:

a foreground contour map acquiring module, configured to acquire a foreground contour map of the text, where the foreground contour map is acquired based on the system for acquiring a foreground contour of a text in the technical solution of the above system for acquiring a foreground contour of a text; and

a text watermark image acquiring module, configured to set the transparency of pixels without contours in the foreground contour map of the text to transparent, to acquire the watermark image of the text.

In a fifth aspect, provided is a control device, including a processor and a storage apparatus, where the storage device is configured to store a plurality of program codes, and the program codes are configured to be loaded and executed by the processor to perform the method for acquiring a foreground contour of a text in any one of the technical solutions of the above method for acquiring a foreground contour of a text or the method for acquiring the watermark image of the text in any one of the technical solutions of the above method for acquiring a watermark image of a text.

In a sixth aspect, provided is a computer-readable storage medium storing a plurality of program codes, where the program codes are configured to be loaded and executed by a processor to perform the method for acquiring a foreground contour of a text in any one of the technical solutions of the above method for acquiring a foreground contour of a text or the method for acquiring a watermark image of a text in any one of the technical solutions of the above method for acquiring a watermark image of a text.

The above one or more technical solutions of the present invention have at least one or more of the following beneficial effects:

In the technical solutions for implementing the present invention, based on the present invention, the original text image to be processed is converted into the grayscale image, histogram statistics and edge extraction are separately performed on the grayscale image to obtain the binary image and the edge gradient result of the grayscale image, the binary image and the edge gradient are fused, and the watermark image is acquired based on the foreground contour map. Through the above configuration, based on the present invention, performing image segmentation based on the statistical histogram to obtain the binary image enables a more accurate segmentation result; performing edge extraction on the grayscale image at the same time enables the edge gradient result to more accurately reflect the contour of the edge; the foreground contour map obtained based on the fusion of the edge gradient result and the binary image allows for extracting a text contour more accurately and further acquiring the watermark image.

**BRIEF DESCRIPTION OF DRAWINGS**

The disclosure of the present invention will become more easily understood with reference to the accompanying drawings. It is easy to be understood by those skilled in the art that these accompanying drawings are only used for illustrative purposes and are not intended to limit the scope of protection of the present invention, in which:

FIG. 1 is a schematic flowchart of main steps of a method for acquiring a foreground contour of a text according to an embodiment of the present invention;

FIG. 2 is a schematic flowchart of main steps of a method for acquiring a watermark image of a text according to an embodiment of the present invention;

FIG. 3 is a schematic diagram showing comparison among an original text image, a grayscale image and a preprocessing result image according to an example of an embodiment of the present invention;

FIG. 4 is a schematic diagram of a histogram statistical result according to an example of an embodiment of the present invention;

FIG. 5 is a schematic diagram showing comparison between a grayscale image and a binary image according to an example of an embodiment of the present invention;

FIG. 6 is a schematic diagram of Schaar's convolution kernels according to an implementation of an embodiment of the present invention;

FIG. 7 is a schematic diagram showing comparison among edges in the horizontal direction, edges in the vertical direction and an edge gradient result obtained using a Schaar operator according to an example of an embodiment of the present invention;

FIG. 8 is a schematic diagram showing comparison among a binary image, an edge gradient result and a foreground contour map according to an example of an embodiment of the present invention;

FIG. 9 is a schematic diagram showing comparison between a foreground contour map and a watermark image according to an example of an embodiment of the present invention;

FIG. 10 is a schematic flowchart of main steps of a method for acquiring a watermark image of a text according to an implementation of an embodiment of the present invention;

FIG. 11 is a block diagram of a main structure of a system for acquiring a foreground contour of a text according to an embodiment of the present invention; and

FIG. 12 is a block diagram of a main structure of a system for acquiring a watermark image of a text according to an embodiment of the present invention.

## DETAILED DESCRIPTION

Some implementations of the present invention are described below with reference to the accompanying drawings. Those skilled in the art should understand that these implementations are only used to explain the technical principles of the present invention and are not intended to limit the scope of protection of the present invention.

In the description of the present invention, "module" and "processor" may include hardware, software, or a combination of both. A module may include hardware circuits, various appropriate sensors, communication ports, and memories; it may also include software portions, such as program codes; or it may be a combination of software and hardware. The processor may be a central processing unit, a microprocessor, an image processor, a digital signal processor, or any other suitable processor. The processor has data and/or signal processing functions, and may be implemented in software, hardware, or a combination of both. The non-transitory computer-readable storage medium includes any suitable medium that can store program codes, such as a magnetic disk, a hard disk, an optical disk, a flash memory, a read-only memory, a random access memory, etc. The term "A and/or B" represents all possible combinations of A and B, such as only A, only B, or A and B. The term "at least one of A or B" or "at least one of A and B" has a meaning similar to "A and/or B" and may include only A, only B, or A and B. The singular forms "a", "an" and "the" may also contain the plural forms.

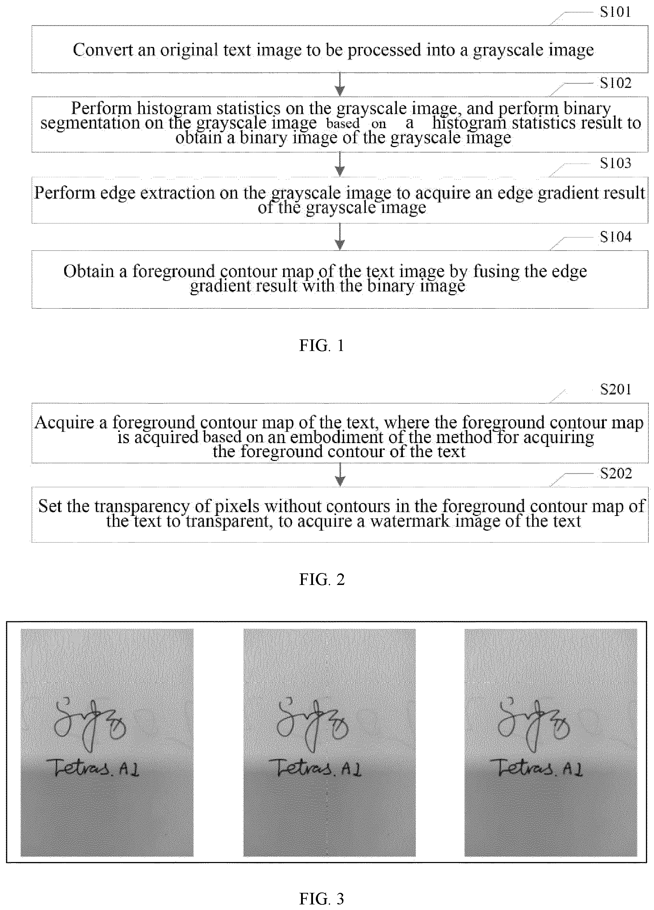

Referring to FIG. 1, FIG. 1 is a schematic flowchart of main steps of a method for acquiring a foreground contour of a text according to an embodiment of the present invention. As shown in FIG. 1, the method for acquiring a foreground contour of a text in the embodiment of the present invention mainly includes the following steps S101 to S104.

Step S101: Convert an original text image to be processed into a grayscale image.

In the embodiment, the original text image to be processed may be converted into the grayscale image.

In an implementation, the original text image may be a photo of a handwritten text, which may be obtained as the original text image by starting a camera, entering a document watermark mode, and clicking a shooting button to trigger a photo shoot once.

Step S102: Perform histogram statistics on the grayscale image, and perform binary segmentation on the grayscale image based on the histogram statistics result to obtain a binary image of the grayscale image.

In the embodiment, histogram statistics may be performed on the grayscale image, and binary segmentation may be performed on the grayscale image based on a histogram statistics result, thereby acquiring a binary image. The binary image refers to an image in which each pixel has only two possible values or grayscale levels. People often use black and white, B&W (Black&White), and monochrome images to represent binary images.

In an implementation, a number of the respective grayscale values in the image may be counted in the histogram.

Step S103: Perform edge extraction on the grayscale image to acquire an edge gradient result of the grayscale image.

**In** the embodiment, edge extraction may be performed on the grayscale image to acquire the edge gradient result of the grayscale image. An edge is a dividing line between different areas, and is a collection of pixels with significant changes in surrounding (local) pixels; the edge gradient is directional and is always orthogonal (perpendicular) to the direction of the edge.

In an implementation, edges of the grayscale image may be detected using commonly used edge detection operators, such as Roberts, Sobel, Prewitt, Laplacian, Log/Marr, Canny, Kirsch, Nevitia, etc.

Step S104: Obtain a foreground contour map of the text image by fusing the edge gradient result with the binary image.

In the embodiment, the foreground contour map of the text image may be acquired based on the edge gradient result and the binary image.

In an implementation, a superposition operation may be performed based on the edge gradient result and the value of each pixel of the binary image, thereby obtaining the foreground contour map of the text image.

In an implementation, after the watermark image is acquired, relevant information may be updated, and the current shooting may be terminated.

Based on the above steps S101 to S104, according to the embodiments of the present invention, the original text image to be processed is converted into the grayscale image, histogram statistics and edge extraction are separately performed on the grayscale image to obtain the binary image and the edge gradient result of the grayscale image, the binary image and the edge gradient are fused to obtain the foreground contour map of the text image, and the watermark image is acquired based on the foreground contour map. Through the above configuration, according to the embodiments of the present invention, performing image segmentation based on the statistical histogram to obtain the binary image enables a more accurate segmentation result; performing edge extraction on the grayscale image at the same time enables the edge gradient result to more accurately reflect the contour of the edge; the foreground contour map obtained based on the fusion of the edge gradient result and the binary image allows for extracting the text contour more accurately and further acquiring the watermark image.

Step S102, step S103 and step S104 are further described below, respectively.

In an implementation of an embodiment of the present invention, step S102 may further include the following steps S1021 to S1024:

Step S1021: Perform filtering preprocessing on the grayscale image to acquire a preprocessing result image.

In this implementation, filtering preprocessing may be performed on the grayscale image to effectively filter out noise in the grayscale image, to obtain the preprocessing result image. Referring to FIG. 3, FIG. 3 is a schematic diagram showing comparison among an original text image, a grayscale image and a preprocessing result image according to an example of an embodiment of the present invention. In FIG. 3, the left side shows the original text image, the middle shows the grayscale image, and the right side shows the preprocessing result image.

In an implementation, filtering preprocessing may be performed on the grayscale image by applying Gaussian filtering or median filtering.

Step S1022: Perform histogram statistics on the preprocessing result image to obtain a histogram of the preprocessing result image.

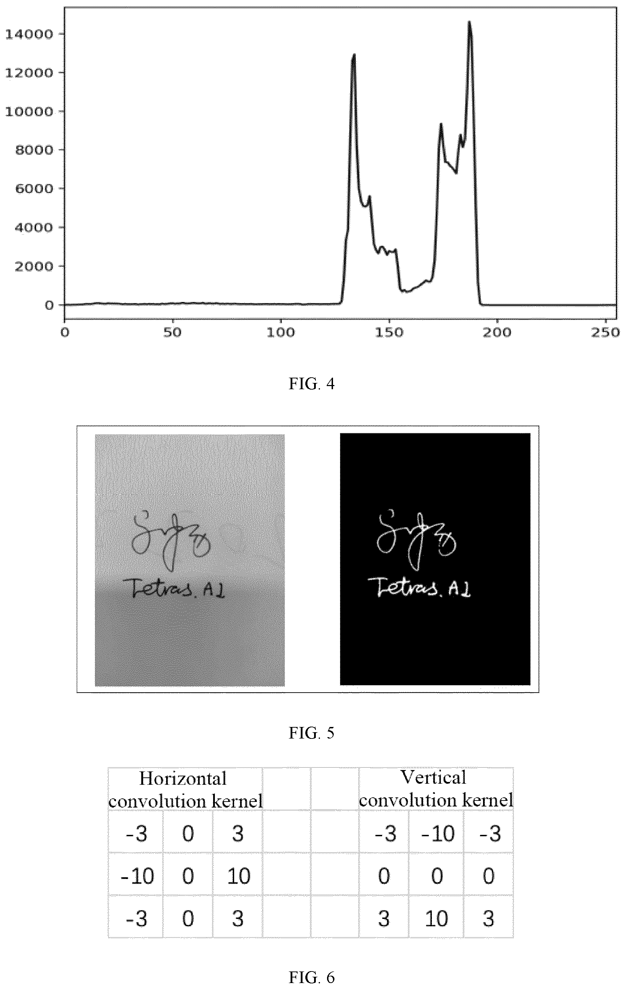

In the implementation, histogram statistics may be performed on the preprocessing result image, and the number of the respective grayscale values in the preprocessing result image may be counted, thereby obtaining the histogram. Referring to FIG. 4, FIG. 4 is a schematic diagram of a histogram statistical result according to an example of an embodiment of the present invention. The figure shows statistical results of the histogram, where the horizontal coordinate is the grayscale value, and the vertical coordinate is the number of grayscale values.

Step S1023: Acquire an image segmentation threshold based on peak values of the histogram.

In the implementation, the peak values may include a maximum peak value and a secondary peak value. Step S1023 may further include steps S10231 to S10233:

Step S10231: Acquire the maximum peak value of the histogram and a grayscale value corresponding to the maximum peak value.

In the implementation, the maximum peak value of the histogram and the grayscale value corresponding to the maximum peak value may be acquired based on the histogram.

Step S10232: Acquire the secondary peak value of the histogram and a grayscale value corresponding to the secondary peak value based on the maximum peak value.

In the embodiment, the secondary peak value may be acquired according to the following formula (1):

$$H_{max2} = max\left[(x - H_{max})^2 \times I_{hist}(x)\right] \quad (1)$$

where $H_{max2}$ is the secondary peak value, x is the grayscale value of the histogram ranging [0, 255], $H_{max}$ is the maximum peak value, and $I_{hist}(x)$ is the number of grayscale values x.

Step S10233: Acquire the image segmentation threshold based on the maximum peak value, the secondary peak value, and the respective corresponding grayscale values.

In this implementation, step S10233 may include the following steps S102331 to S102333:

Step S102331: Determine whether a difference between the grayscale value corresponding to the maximum peak value and the grayscale value corresponding to the secondary peak value is greater than a preset grayscale threshold; if yes, proceed to step S102332; if not, proceed to step S102333.

In the implementation, the difference between the grayscale values corresponding to the maximum peak value and the secondary peak value may be compared with a preset grayscale threshold. Those skilled in the art may set the value of the grayscale threshold based on the needs of actual applications.

Step S102332: Acquire the image segmentation threshold based on a median of the maximum peak value and the secondary peak value.

In the implementation, if the difference between the grayscale values is greater than the grayscale threshold, it may be considered that there are at least two peak values in the histogram, and the median of the maximum peak value and the secondary peak value may be taken as the image segmentation threshold, specifically as shown in the following formula (2):

$$Thre \ = \ (H_{max} \ + \ H_{max2}) \ / \ 2 \quad (2)$$

where Thre is the image segmentation threshold, $H_{max}$ is the maximum peak value, and $H_{max2}$ is the secondary peak value.

Step S102333: Acquire the image segmentation threshold according to the following formula (3):

$$Thre \ = H_{max} - bias \quad (3)$$

where *bias* is a preset bias value.

In the implementation, if the difference between the grayscale values is less than or equal to the grayscale threshold, it means that a distance between the maximum peak value and the secondary peak value is very close. It may be considered that there is only one peak value in the histogram, and a value on the left side of the maximum peak value may be taken as the image segmentation threshold. Those skilled in the art may set the bias value based on the needs of actual applications.

In an implementation, the bias value may be a certain value between 5 and 20.

Step S1024: Perform image segmentation on the grayscale image based on the image segmentation threshold to obtain the binary image.

In the implementation, image segmentation may be performed on the grayscale image based on the image segmentation threshold to acquire the binary image. Specifically, the binary image may be acquired according to the following formula (4):

$$f(x) = \begin{cases} 0, \ if \ I_{gray}(x) \geq Thre \\ 255, \ if \ I_{gray}(x) < Thre \end{cases} \quad (4)$$

where *f(x)* is a grayscale value of pixel x in the binary image, and $I_{gray}(x)$ is a grayscale value of pixel x in the grayscale image.

Referring to FIG. 5, FIG. 5 is a schematic diagram showing comparison between a grayscale image and a binary image according to an example of an embodiment of the present invention. In FIG. 5, the left side shows the grayscale image, and the right side shows the binary image.

In an implementation of an embodiment of the present invention, step S103 may further include the following steps S1031 and S1032:

Step S1031: Perform edge extraction on the grayscale image in horizontal and vertical directions using a Schaar operator, respectively.

In the implementation, the Schaar operator may be used to better reflect details of edge extraction. Referring to FIG. 6, FIG. 6 is a schematic diagram of Schaar's convolution kernels according to an implementation of an embodiment of the present invention. The convolution kernel on the left side of FIG. 6 may be used to perform edge extraction in the horizontal direction, denoted as Schaar_x; the convolution kernel on the right side of FIG. 6 may be used to perform edge extraction in the vertical direction, denoted as Schaar_y.

Step S1032: Weight the extracted edges in the horizontal direction and the vertical direction to obtain an edge gradient result.

In the implementation, the extracted edges in the horizontal direction and the vertical direction may be weighted to acquire the edge gradient result. Specifically, the edge gradient result may be acquired according to the following formula (5):

$$Schaar\_xy = Schaar\_x * wight\_x + Schaar\_y * wight\_y \quad (5)$$

where $Schaar\_xy$ is the edge gradient result, and $wight\_x$ and $wight\_y$ are weights of $Schaar\_x$ and $Schaar\_y$ respectively.

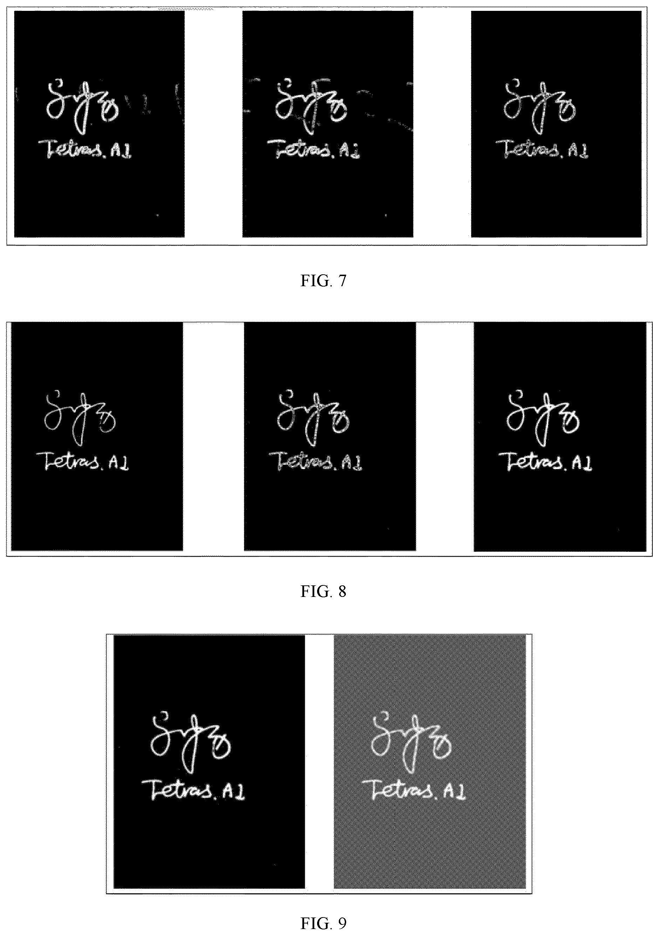

Referring to FIG. 7, FIG. 7 is a schematic diagram showing comparison among edges in the horizontal direction, edges in the vertical direction and an edge gradient result obtained using a Schaar operator according to an example of an embodiment of the present invention. In FIG. 7, the left side shows the edges in the horizontal direction, the middle shows the edges in the vertical direction, and the right side shows the edge gradient result.

In an implementation of an embodiment of the present invention, step S104 may further include the following steps S1041 and S1042:

Step S1041: For each pixel, compare the edge gradient result with a brightness value of the pixel in the binary image.

Step S1042: Use a brightness value of a pixel with a high brightness value as a brightness value of a corresponding pixel in the foreground contour map, to acquire the foreground contour map of the text image.

In the implementation, the edge gradient result may be compared with the brightness value of each pixel in the binary image, and the brightness value of the pixel with high brightness is used as a final result.

In an implementation, step S104 may be implemented according to the following program segment:

```
for(int i=0; i<H; ++i)
for(int j=0; j<W; ++j)
{
Iout[i, j] = max (Schaar_xy[i, j], Ithre[i, j]);
}
```

where H is the image height, W is the image width, and Iout[i, j] is the foreground contour map.

Referring to FIG. 8, FIG. 8 is a schematic diagram showing comparison among a binary image, an edge gradient result and a foreground contour map according to an example of an embodiment of the present invention. In FIG. 8, the left side shows a binary image, the middle shows the edge gradient result, and the right side shows the foreground contour map.

Further, the present invention also provides a method for acquiring a watermark image of a text.

Referring to FIG. 2, FIG. 2 is a schematic flowchart of main steps of a method for acquiring a watermark image of a text according to an embodiment of the present invention. As shown in FIG. 2, the method for acquiring a foreground contour of a text in the embodiment of the present invention mainly includes the following steps S201 to S202.

Step S201: Acquire a foreground contour map of the text, where the foreground contour map is acquired according to an embodiment of the method for acquiring a foreground contour of a text.

Step S202: Set the transparency of pixels without contours in the foreground contour map of the text to transparent, to acquire the watermark image of the text.

In an implementation, the watermark image of the text may be acquired by the following program segment:

```
uint_8 * Idst = new[W * H * 4]
memset(Idst , 0 , sizeof(uint_8) * W * H * 4)
for(int i=0; i < H; ++i)
for(int j=0; j < W; ++j)
{
int t = 4*i* W + j
Idst [t+0] = Iout[i, j] ; Idst [t+1] = Iout[i, j]
Idst [t+2] = Iout[i, j] ; Idst [t+3] = Iout[i, j]
}
```

where Idst [i,j] is the watermark image.

Referring to FIG. 9, FIG. 9 is a schematic diagram showing comparison between a foreground contour map and a watermark image according to an example of an embodiment of the present invention. FIG. 9 shows comparison between the foreground contour map and the watermark image.

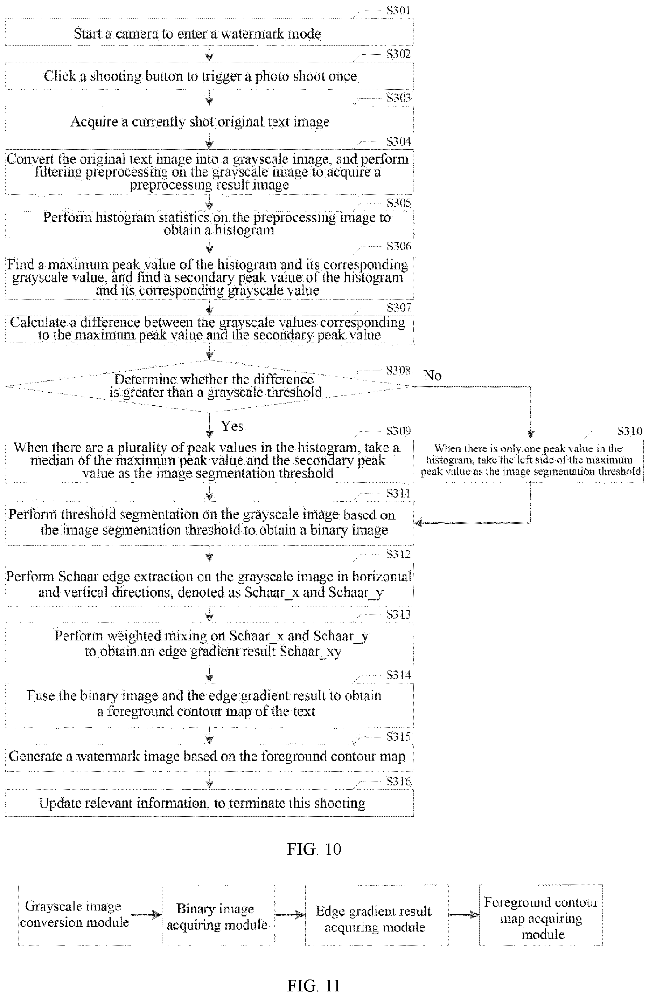

In an implementation, referring to FIG. 10, FIG. 10 is a schematic flowchart of main steps of a method for acquiring a watermark image of a text according to an implementation of an embodiment of the present invention. As shown in FIG. 10, the method for acquiring a watermark image of a text may include the following steps S301 to S316.

Step S301: Start a camera to enter a watermark mode.

Step S302: Click a shooting button to trigger a photo shoot once.

In the implementation, the camera may be started to enter the watermark mode to shoot the handwritten text.

Step S303: Acquire a currently shot original text image.

Step S304: Convert the original text image into a grayscale image, and perform filtering preprocessing on the grayscale image to acquire a preprocessing result image.

In the implementation, the method described in step S304 is similar to the method described in the step S1021, which, for the sake of simplicity of description, will not be repeated here.

Step S305: Perform histogram statistics on the preprocessing image to obtain a histogram.

In the implementation, the method described in step S305 is similar to the method described in the aforementioned step S1022, which, for the sake of simplicity of description, will not be repeated here.

Step S306: Find a maximum peak value of the histogram and its corresponding grayscale value, and find a secondary peak value of the histogram and its corresponding grayscale value.

In the implementation, the method described in step S306 is similar to the method described in the aforementioned step S10231, which, for the sake of simplicity of description, will not be repeated here.

Step S307: Calculate a difference between the grayscale values corresponding to the maximum peak value and the secondary peak value.

Step S308: Determine whether the difference is greater than a grayscale threshold; if yes, proceed to step S309; if not, proceed to step S310.

In the implementation, the methods described in steps S307 and S308 are similar to the method described in the aforementioned step S102331, which, for the sake of simplicity of description, will not be repeated here.

Step S309: When there are a plurality of peak values in the histogram, take a median of the maximum peak value and the secondary peak value as the image segmentation threshold, and then proceed to step S311.

In the implementation, the method described in step S309 is similar to the method described in the aforementioned step S10232, which, for the sake of simplicity of description, will not be repeated here.

Step S310: When there is only one peak value in the histogram, take the left side of the maximum peak value as the image segmentation threshold, and then proceed to step S311.

In the implementation, the method described in step S310 is similar to the method described in the aforementioned step S10233, which, for the sake of simplicity of description, will not be repeated here.

Step S311: Perform threshold segmentation on the grayscale image according to the image segmentation threshold to obtain a binary image.

In the implementation, the method described in step S311 is similar to the method described in the aforementioned step S1024, which, for the sake of simplicity of description, will not be repeated here.

Step S312: Perform Schaar edge extraction on the grayscale image in horizontal and vertical directions, denoted as Schaar_x and Schaar_y.

In the implementation, the method described in step S312 is similar to the method described in the aforementioned step S1031, which, for the sake of simplicity of description, will not be repeated here.

Step S313: Perform weighted mixing on Schaar_x and Schaar_y to obtain an edge gradient result Schaar_xy.

In the implementation, the method described in step S313 is similar to the method described in the aforementioned step S1032, which, for the sake of simplicity of description, will not be repeated here.

Step S314: Fuse the binary image and the edge gradient result to obtain a foreground contour map of the text.

In the implementation, the method described in step S314 is similar to the method described in the aforementioned step S104, which, for the sake of simplicity of description, will not be repeated here.

Step S315: Generate the watermark image based on the foreground contour map.

In the implementation, the method described in step S315 is similar to the method described in the aforementioned step S202, which, for the sake of simplicity of description, will not be repeated here.

Step S316: Update relevant information, to terminate this shooting.

It needs to be pointed out that although the various steps in the above embodiments are described in a specific order of precedence, those skilled in the art may understand that, in order to achieve the effects of the present invention, different steps do not have to be performed in such an order and may be performed simultaneously (in parallel) or in other orders. These changes are within the scope of protection of the present invention.

Further, the present invention also provides a system for acquiring a foreground contour of a text.

Referring to FIG. 11, FIG. 11 is a main structural block diagram of a system for acquiring a foreground contour of a text according to an embodiment of the present invention. As shown in FIG. 11, the system for acquiring a foreground contour of a text in the embodiment of the present invention may include a grayscale image conversion module, a binary image acquiring module, an edge gradient result acquiring module, and a foreground contour map acquiring module. In the embodiment, the grayscale image conversion module may be configured to convert an original text image to be processed into a grayscale image. The binary image acquiring module may be configured to perform histogram statistics on the grayscale image, and perform binary segmentation on the grayscale image according to a histogram statistics result to obtain a binary image of the grayscale image. The edge gradient result acquiring module may be configured to perform edge extraction on the grayscale image to acquire an edge gradient result of the grayscale image. The foreground contour map acquiring module may be configured to obtain a foreground contour map of the text image according to the edge gradient result and the binary image.

The above system for acquiring a foreground contour of a text is used to execute the embodiments of the method for acquiring a foreground contour of a text shown in FIG. 1. The technical principles, technical problems solved and technical effects produced by the two are similar. Those skilled in the art may clearly understand that for the convenience and conciseness of description, the specific working process and related instructions of the system for acquiring a foreground contour of a text may refer to the contents described in the embodiments of the method for acquiring a foreground contour of a text, which will not be repeated here.

Further, the present invention also provides a system for acquiring a watermark image of a text.

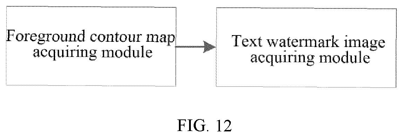

Referring to FIG. 12, FIG. 12 is a block diagram of a main structure of a system for acquiring a watermark image of a text according to an embodiment of the present invention. As shown in FIG. 12, the system for acquiring the watermark image of the text in the embodiment of the present invention may include a foreground contour map acquiring module and a text watermark image acquiring module. In the embodiment, the foreground contour map acquiring module may be configured to acquire a foreground contour map of the text, where the foreground contour map is acquired according to the system for acquiring a foreground contour of a text in the embodiments of the system for acquiring a foreground contour of a text. The text watermark image acquiring module may be configured to set the transparency of pixels without contours in the foreground contour map of the text to transparent, to acquire the watermark image of the text.

The above system for acquiring the watermark image of the text is used to execute the embodiments of the method for acquiring a watermark image of a text shown in FIG. 2. The technical principles, technical problems solved and technical effects produced by the two are similar. Those skilled in the art may clearly understand that for the convenience and conciseness of description, the specific working process and related instructions of the system for acquiring a watermark image of a text may refer to the contents described in the embodiments of the method for acquiring a watermark image of a text, which will not be repeated here.

Those skilled in the art can understand that all or part of the processes in the method for implementing the above embodiment of the present invention may also be completed by instructing related hardware through a computer program. The computer program may be stored in a computer-readable storage medium. When the computer program is executed by a processor, the steps of the above various method embodiments may be implemented. The computer program includes computer program codes, which may be in the form of source codes, object codes, an executable file or in some intermediate forms, etc. The computer-readable storage medium may include: any entity or device, medium, USB flash drive, mobile hard disk, magnetic disk, optical disk, computer memory, read-only memory, random access memory, electrical carrier signal, telecommunication signal and software distribution medium, etc., which can carry the computer program code. It needs to be noted that the content contained in the computer-readable storage medium may be appropriately increased or decreased according to the requirements of legislation and patent practice in the jurisdiction. For example, in some jurisdictions, computer-readable storage media do not include electrical carrier signals and telecommunication signals according to legislation and patent practice.

Further, the present invention also provides a control device. In a control device embodiment according to the present invention, the control device includes a processor and a storage device. The storage device may be configured to store a program for performing the method for acquiring a foreground contour of a text of the above method embodiments, and the processor may be configured to execute the program in the storage device, which program includes but is not limited to the program for performing the method for acquiring a foreground contour of a text of the above method embodiments. For ease of explanation, only the parts related to the embodiments of the present invention are shown. For specific technical details not disclosed, reference is made to the method parts of the embodiments of the present invention. The control device may be a control device consisting of various electronic devices.

Further, the present invention also provides a computer-readable storage medium. In a computer-readable storage medium embodiment according to the present invention, the computer-readable storage medium may be configured to store a program for performing the method for acquiring a foreground contour of a text of the above method embodiments, and the program may be loaded and executed by a processor to implement the above method for acquiring a foreground contour of a text. For ease of explanation, only the parts related to the embodiments of the present invention are shown. For specific technical details not disclosed, reference is made to the method parts of the embodiments of the present invention. The computer-readable storage medium may be a storage device consisting of various electronic devices. Optionally, in an embodiment of the present invention, the computer-readable storage medium is a non-temporary computer-readable storage medium.

Further, the present invention also provides a control device. In a control device embodiment according to the present invention, the control device includes a processor and a storage device. The storage device may be configured to store a program for performing the method for acquiring a watermark image of a text of the above method embodiments, and the processor may be configured to execute the program in the storage device, which includes but is not limited to the program for performing the method for acquiring a watermark image of a text of the above method embodiments. For ease of explanation, only the parts related to the embodiments of the present invention are shown. For specific technical details not disclosed, reference is made to the method parts of the embodiments of the present invention. The control device may be a control device consisting of various electronic devices.

Further, the present invention also provides a computer-readable storage medium. In a computer-readable storage medium embodiment according to the present invention, the computer-readable storage medium may be configured to store a program for performing the method for acquiring a watermark image of a text of the above method embodiments, and the program may be loaded and executed by a processor to implement the above method for acquiring a watermark image of a text. For ease of explanation, only the parts related to the embodiments of the present invention are shown. For specific technical details not disclosed, reference is made to the method parts of the embodiments of the present invention. The computer-readable storage medium may be a storage device composed of various electronic devices. Optionally, in an embodiment of the present invention, the computer-readable storage medium is a non-temporary computer-readable storage medium.

Further, it should be understood that since the settings of the various modules are only for illustrating functional units of the apparatus of the present invention, physical devices corresponding to these modules may be the processor itself, or a part of software in the processor, a part of hardware, or a part of a combination of software and hardware. Therefore, the number of various modules in the figure is only schematic.

Those skilled in the art can understand that the various modules in the apparatus may be adaptively split or merged. Such splitting or merging of specific modules will not cause the technical solution to deviate from the principle of the present invention. Therefore, the technical solutions after splitting or merging will fall within the scope of protection of the present invention.

So far, the technical solution of the present invention has been described in conjunction with the preferred implementations shown in the accompanying drawings. However, it is easy to understand for those skilled in the art that the scope of protection of the present invention is obviously not limited to these specific implementations. Without departing from the principles of the present invention, those skilled in the art may make equivalent changes or substitutions to the relevant technical features, and the technical solutions after these changes or substitutions will fall within the scope of protection of the present invention.

**Claims**

1. A method for acquiring a foreground contour of a text, **characterized in that** the method comprises:

   converting an original text image to be processed into a grayscale image;
   performing histogram statistics on the grayscale image, and performing binary segmentation on the grayscale image based on a histogram statistics result to obtain a binary image of the grayscale image;
   performing edge extraction on the grayscale image to acquire an edge gradient result of the grayscale image; and
   obtaining a foreground contour map of the text image based on the edge gradient result and the binary image.

2. The method for acquiring a foreground contour of a text according to claim 1, **characterized in that** performing histogram statistics on the grayscale image, and performing binary segmentation on the grayscale image based on a histogram statistics result to obtain a binary image of the grayscale image comprises:

   performing filtering preprocessing on the grayscale image to acquire a preprocessing result image;
   performing histogram statistics on the preprocessing result image to obtain a histogram of the preprocessing result image, wherein a number of respective grayscale values in the preprocessing result image is counted in the histogram;
   acquiring an image segmentation threshold based on peak values of the histogram; and
   performing image segmentation on the grayscale image based on the image segmentation threshold to obtain the binary image.

3. The method for acquiring a foreground contour of a text according to claim 2, **characterized in that** the peak values comprise a maximum peak value and a secondary peak value, and acquiring an image segmentation threshold based on peak values of the histogram comprises:

   acquiring the maximum peak value of the histogram and a grayscale value corresponding to the maximum peak value;
   acquiring the secondary peak value of the histogram and a grayscale value corresponding to the secondary peak value based on the maximum peak value; and

acquiring the image segmentation threshold based on the maximum peak value, the secondary peak value, and the respective corresponding grayscale values.

4. The method for acquiring a foreground contour of a text according to claim 3, **characterized in that** acquiring the image segmentation threshold based on the maximum peak value, the secondary peak value, and the respective corresponding grayscale values comprises:

determining whether a difference between the grayscale value corresponding to the maximum peak value and the grayscale value corresponding to the secondary peak value is greater than a preset grayscale threshold;

if yes, acquiring the image segmentation threshold based on a median of the maximum peak value and the secondary peak value; and

if not, acquiring the image segmentation threshold according to the following formula:

$$Thre = H_{max} - bias$$

wherein *Thre* is the image segmentation threshold, $H_{max}$ is the maximum peak value, and *bias* is a preset bias value.

5. The method for acquiring a foreground contour of a text according to claim 3, **characterized in that** acquiring the secondary peak value of the histogram and a grayscale value corresponding to the secondary peak value based on the maximum peak value comprises acquiring the secondary peak value according to the following formula:

$$H_{max2} = max\left[(x - H_{max})^2 * I_{hist}(x)\right]$$

wherein $H_{max2}$ is the secondary peak value, x is the grayscale value of the histogram that has the range of [0, 255], $H_{max}$ is the maximum peak value, and $I_{hist}(x)$ is the number of the respective grayscale values.

6. The method for acquiring a foreground contour of a text according to any one of claims 2 to 5, **characterized in that** performing filtering preprocessing on the grayscale image to acquire a preprocessing result image comprises:

performing filtering preprocessing on the grayscale image by means of Gaussian filtering or median filtering to acquire the preprocessing result image.

7. The method for acquiring a foreground contour of a text according to claim 1, **characterized in that** performing edge extraction on the grayscale image to acquire an edge gradient result of the grayscale image comprises:

performing edge extraction on the grayscale image in horizontal and vertical directions using a Schaar operator, respectively; and

weighting the extracted edges in the horizontal direction and the vertical direction to obtain an edge gradient result.

8. The method for acquiring a foreground contour of a text according to claim 1, **characterized in that** obtaining a foreground contour map of the text image based on the edge gradient result and the binary image comprises:

comparing, for each pixel, the edge gradient result with a brightness value of the pixel in the binary image; and

using a brightness value of a pixel with a high brightness value as a brightness value of a corresponding pixel in the foreground contour map, to acquire the foreground contour map of the text image.

9. A method for acquiring a watermark image of a text, **characterized in that** the method comprises:

acquiring a foreground contour map of the text, wherein the foreground contour map is acquired based on the method for acquiring a foreground contour of a text based on any one of claims 1 to 8; and

setting the transparency of pixels without contours in the foreground contour map of the text to transparent, to acquire the watermark image of the text.

10. A system for acquiring a foreground contour of a text, **characterized in that** the system comprises:

a grayscale image conversion module, configured to convert an original text image to be processed into a grayscale image;

a binary image acquiring module, configured to perform histogram statistics on the grayscale image, and perform binary segmentation on the grayscale image based on a histogram statistics result to obtain a binary image of the grayscale image;

an edge gradient result acquiring module, configured to perform edge extraction on the grayscale image to acquire an edge gradient result of the grayscale image; and

a foreground contour map acquiring module, configured to obtain a foreground contour map of the text image based on the edge gradient result and the binary image.

11. A system for acquiring a watermark image of a text, **characterized in that** the system comprises:

a foreground contour map acquiring module, configured to acquire a foreground contour map of the text, wherein the foreground contour map is acquired based on the system for acquiring a foreground contour of a text according to claim 10; and

a text watermark image acquiring module, configured to set the transparency of pixels without contours in the foreground contour map of the text to transparent, to acquire the watermark image of the text.

12. A control device, comprising a processor and a storage device, wherein the storage device is configured to store a plurality of program codes, **characterized in that** the program codes are configured to be loaded and executed by the processor to perform the method for acquiring a foreground contour of a text according to any one of claims 1 to 8 or the method for acquiring the watermark image of the text according to claim 9.

13. A computer-readable storage medium storing a plurality of program codes, **characterized in that** the program codes are configured to be loaded and executed by a processor to perform the method for acquiring a foreground contour of a text according to any one of claims 1 to 8 or the method for acquiring the watermark image of the text according to claim 9.

S101

Convert an original text image to be processed into a grayscale image

S102

Perform histogram statistics on the grayscale image, and perform binary segmentation on the grayscale image based on a histogram statistics result to obtain a binary image of the grayscale image

S103

Perform edge extraction on the grayscale image to acquire an edge gradient result of the grayscale image

S104

Obtain a foreground contour map of the text image by fusing the edge gradient result with the binary image

FIG. 1

S201

Acquire a foreground contour map of the text, where the foreground contour map is acquired based on an embodiment of the method for acquiring the foreground contour of the text

S202

Set the transparency of pixels without contours in the foreground contour map of the text to transparent, to acquire a watermark image of the text

FIG. 2

FIG. 3

FIG. 4

FIG. 5

| Horizontal convolution kernel | | | | | Vertical convolution kernel | | |
|---|---|---|---|---|---|---|---|
| -3 | 0 | 3 | | | -3 | -10 | -3 |
| -10 | 0 | 10 | | | 0 | 0 | 0 |
| -3 | 0 | 3 | | | 3 | 10 | 3 |

FIG. 6

FIG. 7

FIG. 8

FIG. 9

S301
Start a camera to enter a watermark mode

S302
Click a shooting button to trigger a photo shoot once

S303
Acquire a currently shot original text image

S304
Convert the original text image into a grayscale image, and perform filtering preprocessing on the grayscale image to acquire a preprocessing result image

S305
Perform histogram statistics on the preprocessing image to obtain a histogram

S306
Find a maximum peak value of the histogram and its corresponding grayscale value, and find a secondary peak value of the histogram and its corresponding grayscale value

S307
Calculate a difference between the grayscale values corresponding to the maximum peak value and the secondary peak value

S308    No
Determine whether the difference is greater than a grayscale threshold

Yes    S309
When there are a plurality of peak values in the histogram, take a median of the maximum peak value and the secondary peak value as the image segmentation threshold

S310
When there is only one peak value in the histogram, take the left side of the maximum peak value as the image segmentation threshold

S311
Perform threshold segmentation on the grayscale image based on the image segmentation threshold to obtain a binary image

S312
Perform Schaar edge extraction on the grayscale image in horizontal and vertical directions, denoted as Schaar_x and Schaar_y

S313
Perform weighted mixing on Schaar_x and Schaar_y to obtain an edge gradient result Schaar_xy

S314
Fuse the binary image and the edge gradient result to obtain a foreground contour map of the text

S315
Generate a watermark image based on the foreground contour map

S316
Update relevant information, to terminate this shooting

FIG. 10

| Grayscale image conversion module | → | Binary image acquiring module | → | Edge gradient result acquiring module | → | Foreground contour map acquiring module |

FIG. 11

17

FIG. 12

# INTERNATIONAL SEARCH REPORT

| International application No. |
| --- |
| **PCT/CN2023/130435** |

## A. CLASSIFICATION OF SUBJECT MATTER

G06T 7/13(2017.01)i

According to International Patent Classification (IPC) or to both national classification and IPC

## B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, ENTXT, VEN, CNKI, IEEE: 文本, 前景, 轮廓, 灰度, 直方图, 峰值, 阈值, 二值, 边缘, 梯度, text, foreground, outline, gray+, histogram, peak, threshold, binary, edge, gradient

## C. DOCUMENTS CONSIDERED TO BE RELEVANT

| Category* | Citation of document, with indication, where appropriate, of the relevant passages | Relevant to claim No. |
| --- | --- | --- |
| Y | CN 102810155 A (FUJITSU LTD.) 05 December 2012 (2012-12-05)<br>description, paragraphs 28-41 | 1-7, 9-13 |
| Y | CN 112215856 A (GOERTEK OPTICAL TECHNOLOGY CO., LTD.) 12 January 2021 (2021-01-12)<br>claims 1-10 | 1-7, 9-13 |
| A | CN 104077773 A (BEIJING BOE VISION-ELECTRONIC TECHNOLOGY CO., LTD. et al.) 01 October 2014 (2014-10-01)<br>entire document | 1-13 |
| A | CN 104751422 A (CENTRAL SOUTH UNIVERSITY) 01 July 2015 (2015-07-01)<br>entire document | 1-13 |
| A | CN 109472271 A (LUSTER LIGHTTECH GROUP CO., LTD.) 15 March 2019 (2019-03-15)<br>entire document | 1-13 |
| A | US 2010220927 A1 (SAMSUNG DIGITAL IMAGING CO., LTD.) 02 September 2010 (2010-09-02)<br>entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 January 2024** | **24 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/130435**

| Patent document cited in search report | | | Publication date (day/month/year) | Patent family member(s) | | | Publication date (day/month/year) |
|---|---|---|---|---|---|---|---|
| CN | 102810155 | A | 05 December 2012 | JP | 2012252691 | A | 20 December 2012 |
| CN | 112215856 | A | 12 January 2021 | None | | | |
| CN | 104077773 | A | 01 October 2014 | US | 2016267675 | A1 | 15 September 2016 |
| | | | | WO | 2015196616 | A1 | 30 December 2015 |
| CN | 104751422 | A | 01 July 2015 | None | | | |
| CN | 109472271 | A | 15 March 2019 | None | | | |
| US | 2010220927 | A1 | 02 September 2010 | KR | 20100099005 | A | 10 September 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211585584